# EUROPEAN PATENT APPLICATION

(11) **EP 2 700 981 A1**
(43) Date of publication of application: **26.02.2014**
(21) Application number: 13179657.5
(22) Date of filing: 08.08.2013
(51) Int. Cl.: G01V 1/20

(54) **Antifouling removable streamer second skin and method of mounting thereof**

(30) Priority: 13.08.2012 US 201261682389 P
(71) Applicant: CGG Services SA, 91300 Massy (FR)
(72) Inventor: Macquin, Raphaël, 91300 Massy (FR)
(74) Representative: Regimbeau

(57) **Abstract**

A streamer usable underwater for marine seismic surveys is covered by a removable skin to prevent bio-fouling deposits on its outer surface. The removable skin includes a flexible material charged with a biocide substance or has foul release properties, and a closure system configured to join sides of the flexible material. The removable skin may be mounted onboard of a vessel, while the streamer is deployed.

## Description

### CROSS REFERENCE TO RELATED APPLICATIONS

This application claims priority and benefit from U.S. Provisional Patent Application No. 61/682,389, filed August 13, 2012, for "Antifouling removable streamer second skin and process of mounting," the entire content of which is incorporated in its entirety herein by reference.

### BACKGROUND

### TECHNICAL FIELD

Embodiments of the subject matter disclosed herein generally relate to devices and methods for limiting and/or preventing deposits on a streamer used underwater and, more particularly, to a removable second skin mounted on the streamer.

### DISCUSSION OF THE BACKGROUND

During the past years, offshore drilling has continually increased. Given high costs and risks associated with offshore drilling, to avoid a dry well, marine seismic surveys are used to generate a profile (image) of the geophysical structure under the seafloor. While this profile does not provide an accurate location for the oil and gas, it suggests, to those trained in the field, the presence or absence of oil and/or gas.

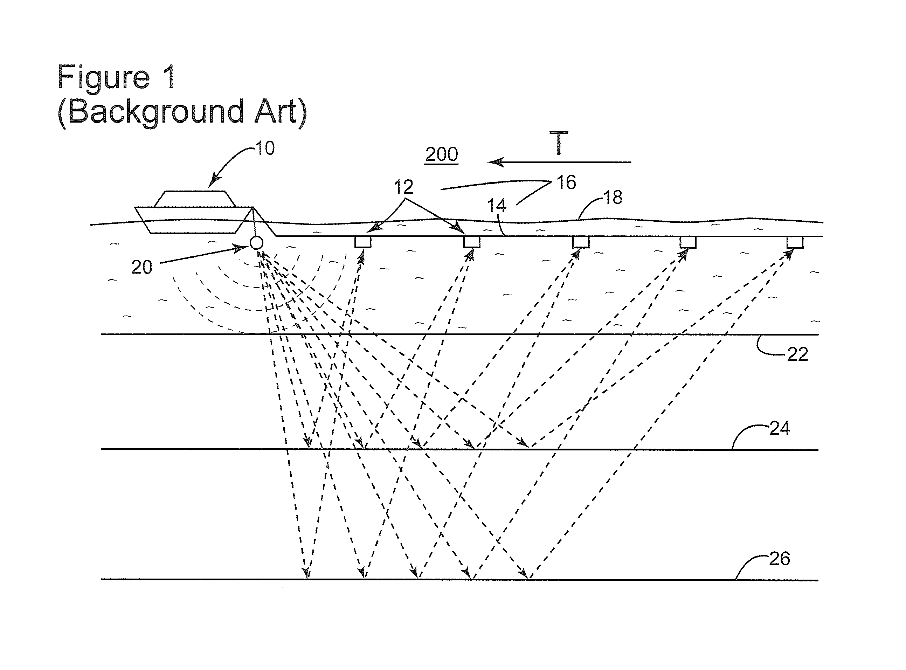

During a seismic exploration, as illustrated in Figure 1, a vessel 10 tows seismic detectors 12 distributed along a cable 14. Cable 14 carrying seismic detectors 12 is called a streamer 16. A streamer may be up to 10 km long and may be formed from plural sections of few hundreds of meters each. Vessel 10 may tow plural streamers 16 at once. Towed streamer 12 may have a constant depth relative to the ocean surface 18 throughout its length, or have a variable depth profile.

Vessel 10 also tows a seismic source 20 configured to generate seismic waves, which penetrate the solid structure under the seafloor 22, and are at least partially reflected by interfaces 24 or 26 between layers having different seismic wave propagation speeds. Seismic detectors 12 detect the reflected waves. The time delay between firing the seismic source and detecting a related reflection provides information about the location (depth) of reflecting interfaces.

Seismic exploration campaigns may last long periods (e.g., several months). During these campaigns, the streamers preferably remain in the water (except, for example, in cases of extreme unfavorable weather conditions) because recovering/deploying the streamers is expensive and tedious. Thus, the streamers are immersed in sea water for several consecutive months, at a shallow depth (a few meters), and are generally dragged at low speed (less than or equal to 5 knots). In these circumstances, the streamers' outer surfaces are subject to fouling, particularly due to the proliferation of microorganisms or bio-fouling. One of the most common types of microorganisms attaching to streamers is barnacles which adhere permanently to a hard substrate either by growing their shells directly onto the substrate of by means of a stalk.

In time, bio-fouling results in substantial disadvantages such as:
(1) generating hydrodynamic flow noise;
(2) amalgams or incrustations forming on the streamer's outer surfaces, which are likely to disturb seismic measurements;
(3) increasing drag on the streamers and, consequently, increasing fuel consumption to tow them;
(4) of a strong, unpleasant stench developing within a few days when streamers covered with bio-fouling are recovered and exposed to air; and
(5) streamer skin being pierced by certain types of bio-fouling, resulting in liquid intake inside the streamer.

Several techniques have been applied conventionally to address the bio-fouling problem. For example, a cleaning device with rotary brushes and/or blades may be temporarily or permanently attached on streamers to clean their outer surfaces. The use of cleaning devices is impeded by the presence of protruding elements (e.g., floaters, or trajectory correction devices known as birds) on the streamers. Although cleaning devices continue to be subject to research and improvement, their practical value (reliability versus cost) remains questionable.

Another conventional technique used to address the bio-fouling problem involves using antifouling paints (also used on boat hulls), for example, paints including cuprous oxides. Such antifouling paints are used with caution, from an environmental standpoint, to minimize sea water pollution. The safe use of antifouling paints may also be problematic for the persons likely to be in contact with antifouling paints during the manipulation of seismic streamers. Furthermore, techniques for applying "antifouling" paint are hardly compatible with technical and economical constraints linked to seismic streamers because painting them is a long and costly operation due to their length. In addition, to allow the paint to dry (to minimize seawater pollution), the painted seismic streamers have to be stored in a manner that requires a considerable amount of space, which is not economically viable onboard a vessel.

Applying a copper coating on streamer's skin as well as loading the streamer's skin with a biocide substance have also been considered. However, the copper coating and the streamer's skin are not removable, so the streamers still have to be cleaned in tedious and expensive ways. Additionally, the biocide substance included in the streamer's skin during manufacturing does not last for the lifetime of the streamer and cannot be replenished later for streamers in use.

Accordingly, it would be desirable to provide devices, systems and methods addressing the bio-fouling problem related to streamers used in marine seismic explorations, in an economically attractive manner and avoiding the aforedescribed problems and drawbacks.

### SUMMARY

A removable second skin with antifouling properties can be easily mounted on and removed from streamers onboard a vessel. The second skin has also the effect of reducing turbulences at discontinuity locations along the streamer.

According to one exemplary embodiment, there is a streamer made of plural sections and usable underwater for marine seismic surveys. The streamer includes a first skin configured to separate its inside thereof from surrounding water when the streamer is submerged, seismic receivers housed inside the first skin, and a removable second skin. The removable second skin is configured to surround the first skin along at least one streamer section length. The removable second skin includes a flexible material with antifouling properties .

According to another embodiment, there is a streamer usable underwater for marine seismic surveys and has a flexible material with antifouling properties wrapped around an outer surface thereof.

According to another embodiment, there is a marine seismic survey system including a streamer configured to be used underwater and made of plural sections. The streamer has a first skin configured to separate its inside thereof from surrounding water when the streamer is submerged, seismic receivers housed inside the first skin, and a removable second skin. The removable second skin is configured to surround the first skin along the streamer's entire length. The removable second skin includes a flexible material charged with a biocide substance and a closure system configured to join sides of the flexible material.

According to another embodiment there is a method for preventing bio-fouling deposits on a streamer's outer surface. The method includes mounting a removable second skin made of a flexible material charged with a biocide substance over an outer surface of the streamer. The method further includes deploying the streamer in water and recording seismic survey data using seismic receivers inside the streamer. The method then includes recovering the streamer from the water and removing the removable second skin from the streamer.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a seismic survey system;

Figure 2 is a cross-section of a streamer according to an embodiment;

Figures 3A, 3B and 3C is illustrate closure systems according to various embodiments;

Figure 4 illustrates another closure system according to an embodiment;

Figures 5A, 5B, 5C and 5D illustrate closure systems including pre-formed shapes, and tools used to interlock and/or unlock the pre-formed shapes according to various embodiments;

Figure 6 illustrates a seismic survey system including a streamer according to an embodiment;

Figure 7 illustrates a process of mounting the removable skin on the streamer according to an embodiment;

Figure 8 is a cross-section of a streamer according to another embodiment;

Figure 9 illustrates a process of mounting the second removable skin according to another embodiment;

Figure 10 is a flowchart illustrating steps performed by a method for preventing bio-fouling deposits on an outer surface of a streamer according to an embodiment; and

Figure 11A illustrates locations favorable to abundant barnacle growth on a streamer unprotected by the removable skin, and Figure 11B illustrates the effect of using the removable skin at these locations.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a seismic survey system including at least one streamer. However, the embodiments to be discussed next are not limited to these structures, but may be applied to other structures that are subject to bio-fouling while immersed.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

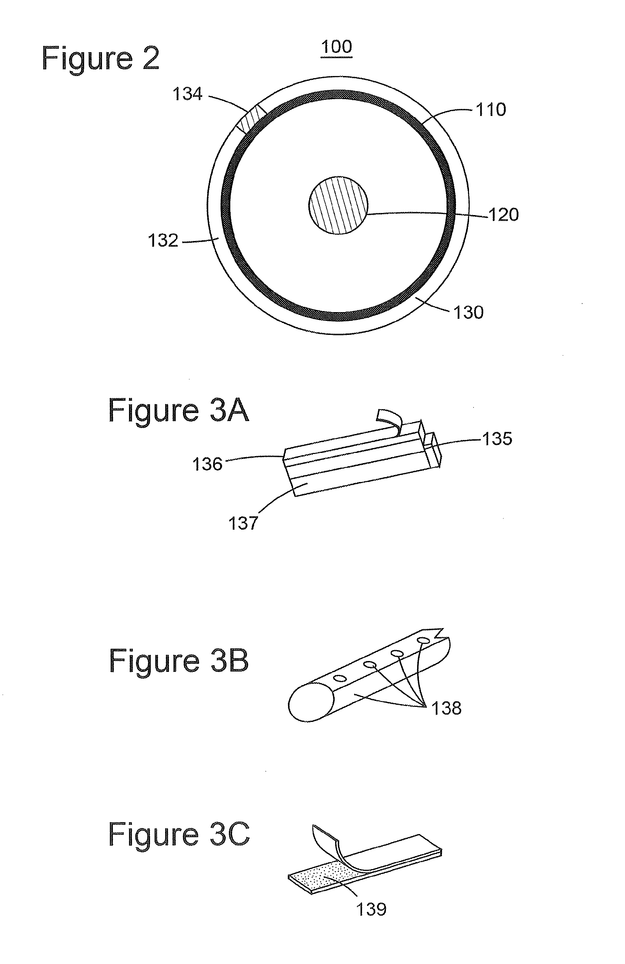

According to one embodiment illustrated in Figure 2, a streamer 100 (seen in cross-section) usable underwater for marine seismic surveys has the following structure: a first skin 110, seismic receivers 120 housed inside first skin 110, and a removable second skin 130. First skin 110 is a strength member configured to separate and protect the inside from surrounding water when the streamer is submerged. First skin 110 may include multiple layers of different materials. Seismic receivers 120 as well as electrical cables or other electrical components are typically located in a central zone of the streamer. Inside first skin 110, a material lighter than water (e.g., a foam) may fill a predetermined volume to make the streamer buoyancy neutral.

Removable second skin 130 is configured to surround first skin 120 along the length of at least one section (of hundreds of meters) of a streamer 100. The second skin may be applied on few adjacent or separate sections or on all the sections of a streamer. Removable second skin 130 includes a flexible material 132 antifuling properties and a closure system 134 configured to join sides of flexible material 132. The antifouling properties may be due to the flexible material being charged with a biocide substance or having an outer foul-releasing (i.e., anti-adhesive) surface due to a super-hydrophobic nanocoating, silicon coating, fluoropolymer, etc.

Preferably, the flexible material is acoustically transparent to have no negative impact on the seismic measurements performed by the seismic receivers inside the streamer. Flexible material 132, which may have a thickness of less than 1 mm, has antifouling properties. The flexible material may be polyurethane, polyvinyl chloride (PVC), polyamides, anti-abrasive textile, fluored polymers or any other thermoplastic, etc.

In one embodiment, the antifouling properties are due to an anti-adhesive coating including silicon or fluored polymers. In another embodiment, the antifouling properties may be due to the flexible material's hydrophobic surface or superhydrophpbic using nanotechnologies coatings. In yet another embodiment, antifouling properties are due to an antifouling paint pre-applied on the flexible material before mounting the removable second skin on the streamer.

The closure system may be configured to connect overlapping surfaces of the flexible material. For example, the closure system may include an adhesive layer 135 applied in between the overlapping surfaces 136 and 137 as illustrated in Figure 3A, pressure buttons 138 as illustrated in Figure 3B, and/or Velcro-type connectors 139 as illustrated in Figure 3C.

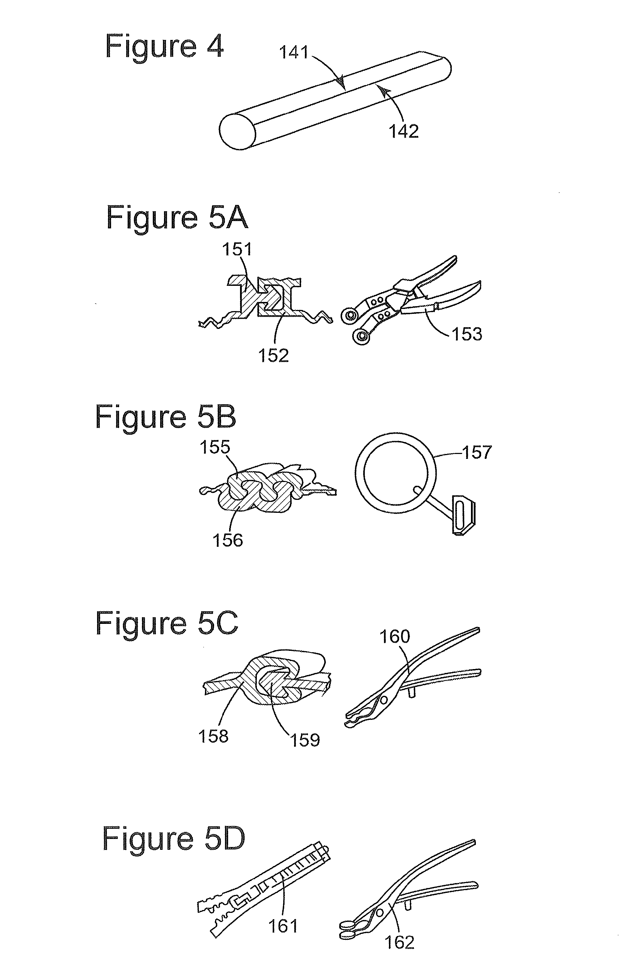

In another embodiment, sides 141 and 142 of the flexible material 132 are welded with ultrasound or by temperature when the removable second skin is mounted along the streamer as illustrated in Figure 4.

According to yet another embodiment, the closure system includes pre-formed shapes located along the sides and configured to interlock when the removable second skin is mounted along the streamer. For example, Figure 5A illustrates a male part 151 and a female part 152 engaged with each other and separated using a tool 153. In another example, Figure 5B illustrates a first type of molded shapes 155 and 156 engaged with each other and then separated using tool 157. Yet in another example, Figure 5C illustrates a second type of molded shapes 158 and 159 engaged with each other and separated using a tool 160. In yet another embodiment, Figure 5D illustrates a zipper type of closing system 161 and a tool 162 that may be used to close/open this type of system.

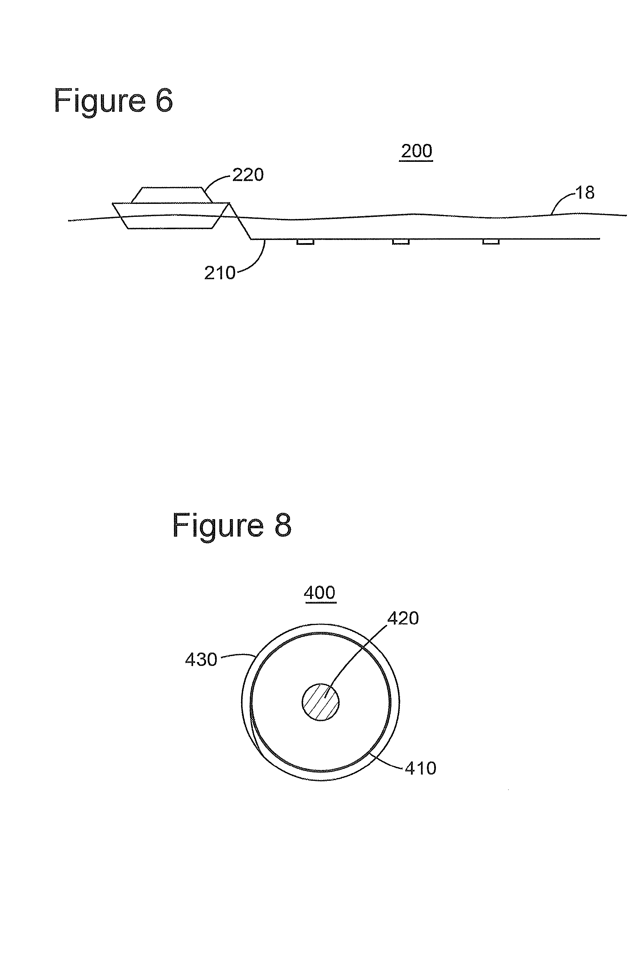

Figure 6 illustrates a marine seismic survey system 200 including a streamer 210 configured to be towed underwater, for example, by vessel 220. Streamer 210 may be any of the above-described embodiments.

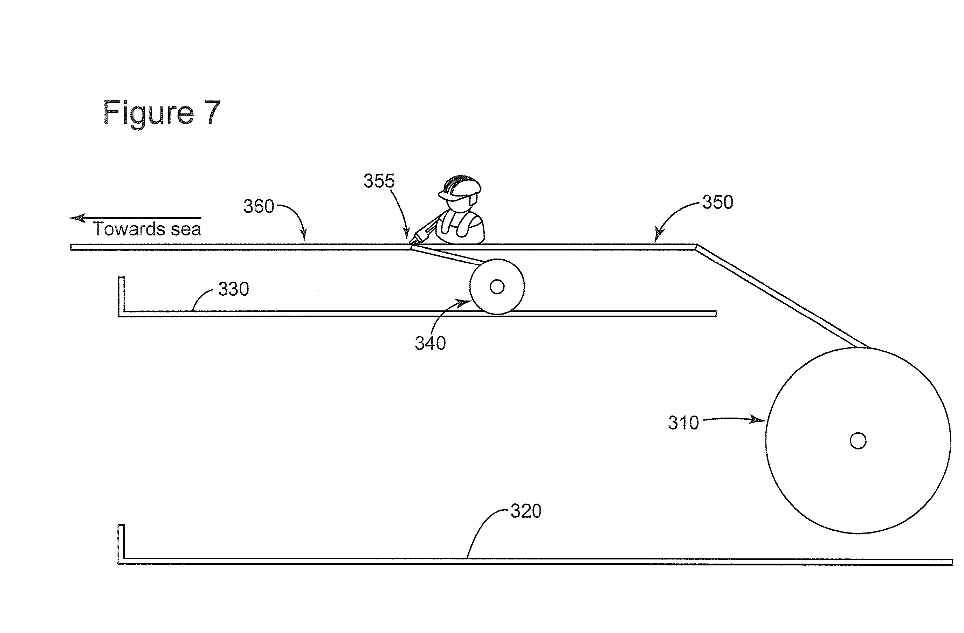

The removable second skin according to the above-described embodiments may be mounted on the streamer as the streamer is moved to be deployed in the water. For example, as illustrated in Figure 7, a streamer winch 310 may be stored on a lower deck 320 of the vessel. While the streamer moves from the winch toward the sea, it passes through a second skin mounting area on an upper deck 330 where a removable second skin on a second winch 340 is applied to surround the "naked" (i.e., without the removable second skin) streamer 350 for at least one section's length (about 200 m). In the second skin mounting area, a worker joins sides of the flexible material either by welding or by interlocking the closing system using the appropriate tool. Thus, after passing through the second skin mounting area 355, streamer 360 is protected by the second removable skin. In one embodiment, the second skin may be made of thermoretractable plastic heated during the streamer's deployment.

The above-described operation may be reversed when the streamer is recovered from the water: streamer 360 protected by the second removable skin has its closure system opened while passing through the second skin mounting area 355, the removed second skin being rolled back on the second skin winch 340 while the naked streamer 350 is stored on the streamer winch 310. However, depending on the length of time the streamer was submerged and/or how long it will be until the streamer is deployed again, operators may decide to maintain the second removable skin on the streamer when the streamer is recovered (e.g., storing streamer 360 protected by the second removable skin on streamer winch 310).

According to another embodiment illustrated in Figure 8, a streamer 400 usable underwater for marine seismic surveys has a first skin 410 configured to separate an inside thereof from surrounding water when the streamer is submerged, seismic receivers 420 housed inside the first skin, and a removable second skin 430 configured to cover the first skin 410 along the streamer's entire length. The removable second skin 430 includes a flexible material charged with any antifouling properties wrapped around the first skin along the streamer.

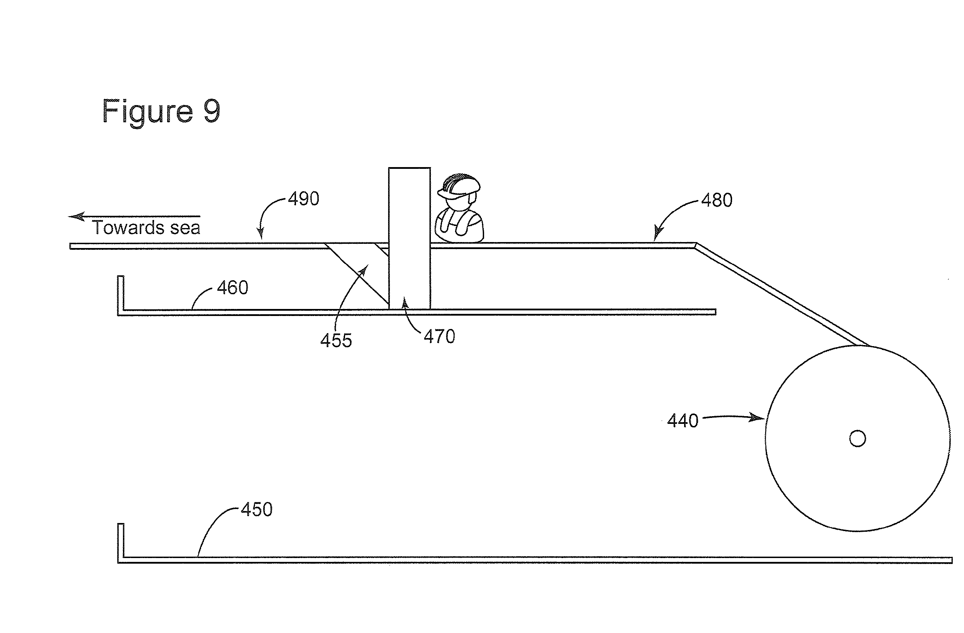

Removable second skin 430 may be mounted on the streamer as it is moved to be deployed in the water on the deck of a vessel. For example, as illustrated in Figure 9, a streamer winch 440 may be stored on a lower deck 450 of a vessel. While the streamer moves from the streamer winch 440 toward the sea, it passes through a second skin mounting area 455 on an upper deck 460 where a packing machine 470 wraps the second skin around the "naked" (i.e., without the removable second skin) streamer 480. Thus, after passing through the second skin mounting area, streamer 490 is protected by the second removable skin.

The above-described operation may be reversed when the streamer is recovered from the water: the second removable skin is unwrapped from streamer 490 passing through the second skin mounting area 455, the naked streamer 480 being then stored on the streamer winch 440. As previously mentioned, depending on the length of time the streamer was submerged and/or how long it would be until the streamer is deployed again, operators may decide to maintain the second removable skin on the streamer when the streamer is recovered (e.g., storing streamer 490 protected by the second removable skin on streamer winch 440).

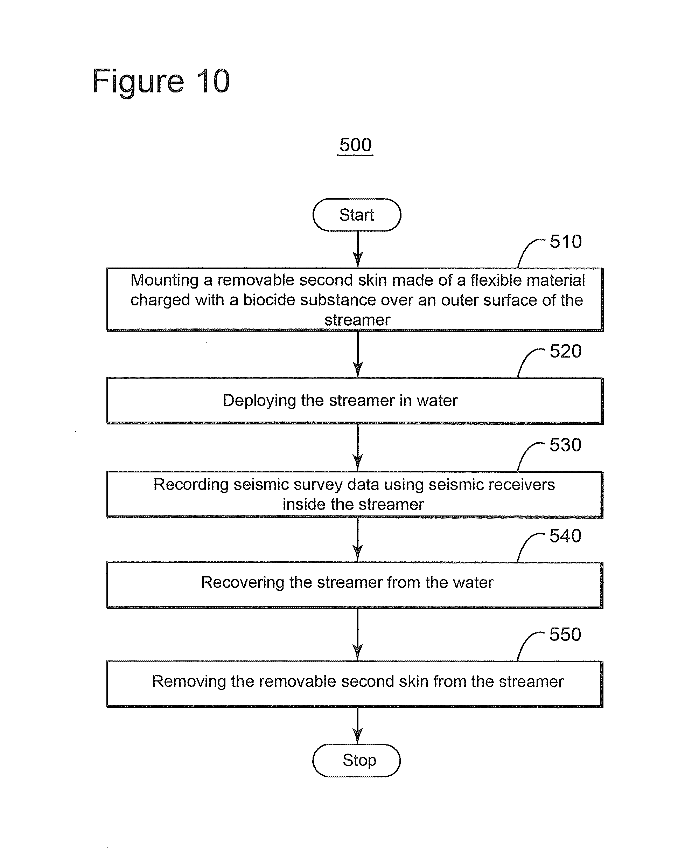

Figure 10 is a flow diagram of a method 500 for preventing bio-fouling deposits on an outer surface of a streamer according to an embodiment. Method 500 includes mounting a removable second skin made of a flexible material charged with a biocide substance or has foul release properties, over a first outer skin of the streamer, at 510. Method 500 further includes deploying the streamer in water, at 520, recording seismic survey data using seismic receivers inside the streamer, at 530, and recovering the streamer from the water, at 540. Finally, the method includes removing the removable second skin at 550. In one embodiment, mounting 510 includes joining sides of the flexible material via a closing system. In another embodiment, mounting 510 includes wrapping the flexible material around the streamer. Mounting 510 may occur when the streamer is moved to be deployed in the water.

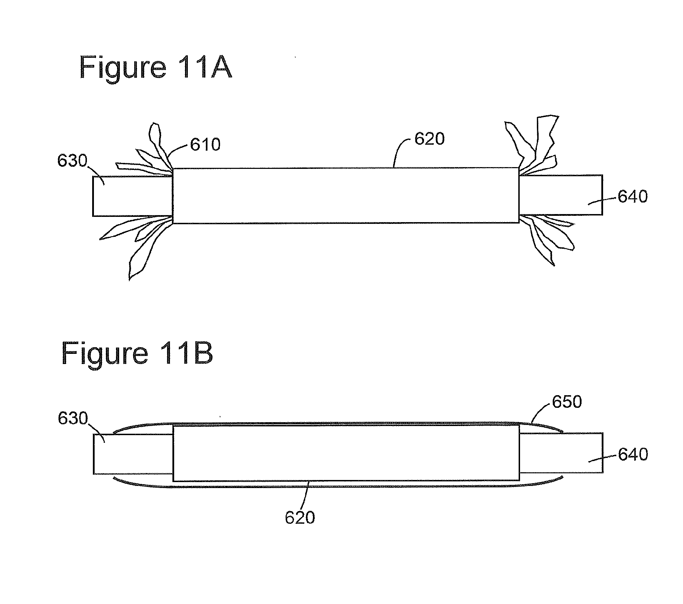

It has been observed that barnacles tend to attach and grow at locations along the stream at which the profile has discontinuities, and, thus, turbulences. For example, as illustrated in Figure 11A, barnacle 610 grows in abundance at locations at which width varies (a portion 620 having a larger diameter than the adjacent portions of the streamer 630 and 640) such as bird collars and weights. One advantage of using the removable second skin is that such discontinuities are smoothed out, and local bio-fouling protection is provided due to the surrounding material 650 loaded with a biocide substance.

Another advantage is that the second skin is separated from the streamer with relatively little effort, and, in the same time, any fouling deposited thereon is removed. Thus, the expense and effort to clean the streamer is avoided by using the removable second skin to cover the streamer. On the other hand, the removable second skin may be cleaned and recycled, being less cumbersome to do so than cleaning the heavy and bulky (i.e., carrying seismic receivers) streamers.

Another advantage is that toxic substance such as antifouling paints may be applied on the second removable skin and dried before it is brought onboard the vessel, thereby avoiding the problem of safely and economically applying antifouling paints onboard.

The disclosed exemplary embodiments provide a removable second skin, a streamer with a removable second skin, and related methods for preventing bio-fouling deposits on an outer surface of a streamer. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A streamer (100) made of plural sections and usable underwater for marine seismic surveys, the streamer comprising:
a first skin (110) configured to separate an inside thereof from surrounding water when the streamer is submerged;
seismic receivers (120) housed inside the first skin; and
a removable second skin (130) configured to surround the first skin along at least one streamer section length, the removable second skin including a flexible material (132) with antifouling properties.

2. The streamer of claim 1, wherein the flexible material has an anti-adhesive coating from a group including a super-hydrophobic nanocoating, a silicon coating, and a fluored polymers coating.

3. The streamer of claim 1, wherein the flexible material has a thickness of less than 1 mm.

4. The streamer of claim 1, wherein the flexible material is charged with a biocide substance.

5. The removable skin of claim 1, wherein the flexible material is acoustically transparent.

6. The streamer of claim 1, wherein the flexible material is covered with an antifouling paint.

7. The streamer of claim 1, wherein the second skin further includes a closure system configured to connect overlapping surfaces of the flexible material, the closure system including at least one of:
an adhesive layer applied in-between the overlapping surfaces;
pressure buttons; and
velcro type of connectors.

8. The streamer of claim 1, wherein sides of the flexible material are welded with ultrasound or by temperature when the removable second skin is mounted along the streamer.

9. The streamer of claim 1, wherein the second skin further includes a closure system configured to join sides of the flexible material and having pre-formed shapes located along the sides, the pre-formed shapes being configured to interlock when the removable second skin is mounted along the streamer.

10. A streamer (400) usable underwater for marine seismic surveys having a flexible material (420) with antifouling properties wrapped around an outer surface thereof.

11. A marine seismic survey system (200), comprising:
a streamer (210, 100) configured to be used underwater, made of plural sections and having
a first skin (110) configured to separate an inside thereof from surrounding water when the streamer is submerged;
seismic receivers (120) housed inside the first skin; and
a removable second skin (130) configured to surround the first skin along at least one streamer section length, the removable second skin including a flexible material (132) with antifouling properties.

12. The marine seismic survey system of claim 11, wherein the flexible material has an anti-adhesive coating from a group including a super-hydrophobic nanocoating, a silicon coating, and a fluored polymers or is covered with an antifouling paint.

13. A method (500) for preventing bio-fouling deposits on an outer surface of a streamer, the method comprising:
mounting (510) a removable second skin made of a flexible material with antifouling properties over an outer surface of the streamer;
deploying (520) the streamer in water;
recording (530) seismic survey data using seismic receivers inside the streamer;
recovering (540) the streamer from the water; and
removing (550) the removable second skin from the streamer.

14. The method of claim 13, wherein the mounting includes joining sides of the flexible material via a closure system, and the mounting occurs when the streamer is moved to be deployed in the water.

15. The method of claim 13, wherein the mounting includes wrapping the flexible material around the streamer, and the mounting occurs when the streamer is moved to be deployed in the water.
